# EUROPÄISCHE PATENTSCHRIFT

(11) **EP 2 791 531 B1**
(45) Veröffentlichungstag und Bekanntmachung des Hinweises auf die Patenterteilung: **21.02.2018**
(21) Anmeldenummer: 12821243.8
(22) Anmeldetag: 12.12.2012
(51) Int. Cl.: F16D 28/00, B60K 6/387

(54) **ELEKTRISCHE MASCHINE**
ELECTRIC MACHINE
MOTEUR ÉLECTRIQUE

(30) Priorität: 14.12.2011 DE 102011088473
(43) Veröffentlichungstag der Anmeldung: 22.10.2014
(73) Patentinhaber: Schaeffler Technologies AG & Co. KG, 91074 Herzogenaurach (DE)
(72) Erfinder: HELMER, Daniel, 77855 Achern-Fautenbach (DE); VOGEL, Florian, 77815 Bühl (DE)
(86) Internationale Anmeldenummer: PCT/DE2012/001190
(87) Internationale Veröffentlichungsnummer: WO 2013/087061

(56) Entgegenhaltungen:
- DE-C1- 3 834 555
- US-A1- 2004 084 979

## Beschreibung

Die Erfindung betrifft eine elektrische Maschine mit einer Kupplungseinrichtung und einer Betätigungseinrichtung für einen Antriebsstrang eines Kraftfahrzeugs gemäß dem Oberbegriff des Patentanspruchs 1.

Aus der älteren, aber nicht vorveröffentlichten EP 2 791 530 A1 ist eine Kupplungseinrichtung bekannt mit einer Betätigungseinrichtung für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits angeordnet ist, wobei die Kupplungseinrichtung und die Betätigungseinrichtung in den Rotor der elektrischen Maschine integriert sind. Zur genaueren Information über die Merkmale der vorliegenden Erfindung wird ausdrücklich auf die EP 2 791 530 A1 verwiesen. Die Lehre dieser Veröffentlichung ist als Bestandteil des vorliegenden Dokuments anzusehen. Merkmale dieser Veröffentlichung sind Merkmale des vorliegenden Dokuments.

Eine elektrische Maschine mit einer Kupplungseinrichtung und einer Betätigungseinrichtung für einen Antriebsstrang eines Kraftfahrzeugs gemäß dem Oberbegriff des Patentanspruchs 1 ist aus der US 2004/0084979 A1 bekannt.

Der Erfindung liegt die Aufgabe zugrunde, eine eingangs genannte elektrische Maschine mit einer Kupplungseinrichtung und einer Betätigungseinrichtung baulich und/oder funktional zu verbessern. Insbesondere soll eine Betätigung der Kupplungseinrichtung auch bei Stillstand der Brennkraftmaschine und/oder der elektrischen Maschine ermöglicht sein. Insbesondere soll eine Funktion als Wegfahrsperre ermöglicht sein. Insbesondere soll bei Bestromung ein Vorsteuermoment zur Betätigung der Kupplungseinrichtung bereitstellbar sein. Außerdem liegt der Erfindung die Aufgabe zugrunde, eine elektrische Maschine mit einem Stator, einem Rotor und einer in den Rotor integrierten derartigen Kupplungseinrichtung bereitzustellen.

Erfindungsgemäß gelöst wird diese Aufgabe durch eine elektrische Maschine mit einer Kupplungseinrichtung und einer Betätigungseinrichtung für einen Antriebsstrang eines Kraftfahrzeugs gemäß Patentanspruch 1. Bevorzugte Ausführungsbeispiele sind in den abhängigen Patentansprüchen dargelegt.

In dem Antriebsstrang können die Brennkraftmaschine, die Kupplungseinrichtung, die elektrische Maschine und die Getriebeeinrichtung in der genannten Reihenfolge angeordnet sein. In dem Antriebsstrang kann ein Drehschwingungsdämpfer, insbesondere ein Zweimassenschwungrad, angeordnet sein. Der Drehschwingungsdämpfer kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Die Bezeichnungen "Eingangsteil" und "Ausgangsteil" sind auf einen von der Brennkraftmaschine ausgehenden Leistungsfluss bezogen. Der Drehschwingungsdämpfer kann in dem Antriebsstrang zwischen der Brennkraftmaschine und der Kupplungseinrichtung angeordnet sein. Der Drehschwingungsdämpfer kann in dem Antriebsstrang zwischen der Brennkraftmaschine und der elektrische Maschine angeordnet sein. Das Eingangsteil des Drehschwingungsdämpfers kann mit der Brennkraftmaschine antriebsverbunden sein. Das Ausgangsteil des Drehschwingungsdämpfers kann mit der Kupplungseinrichtung antriebsverbindbar sein. Das Ausgangsteil des Drehschwingungsdämpfers kann mit der elektrischen Maschine antriebsverbindbar sein. In dem Antriebsstrang kann wenigstens ein antreibbares Rad angeordnet sein. Das wenigstens eine antreibbare Rad kann in dem Antriebsstrang der Getriebeeinrichtung nachfolgend angeordnet sein.

Das Kraftfahrzeug kann einen Hybridantrieb aufweisen. Das Kraftfahrzeug kann einen ersten Energieumwandler aufweisen. Der erste Energieumwandler kann die Brennkraftmaschine sein. Die Brennkraftmaschine kann mit einem Kohlenwasserstoff, wie Benzin, Diesel, Flüssiggas (Liquefied Petroleum Gas, LPG, GPL), verdichtetem Erdgas (Compressed Natural Gas, CNG) oder flüssigem Erdgas (Liquefied Natural Gas, LNG) betreibbar sein. Die Brennkraftmaschine kann mit Wasserstoff betreibbar sein. Das Kraftfahrzeug kann einen ersten Energiespeicher aufweisen. Der erste Energiespeicher kann ein Kraftstofftank sein. Der erste Energiespeicher kann ein Fluidtank sein. Das Kraftfahrzeug kann einen zweiten Energieumwandler aufweisen. Der zweite Energieumwandler kann die elektrische Maschine sein. Die elektrische Maschine kann als Elektromotor betreibbar sein. Die elektrische Maschine kann als Generator betreibbar sein. Die elektrische Maschine kann einen Elektromotor und einen Generator baulich vereinigen. Die elektrische Maschine kann ein Starter-Generator sein. Das Kraftfahrzeug kann einen zweiten Energiespeicher aufweisen. Der zweite Energiespeicher kann ein elektrischer Energiespeicher sein. Der zweite Energiespeicher kann ein Akkumulator sein. Die Energieumwandler können zum Antrieb des Kraftfahrzeugs dienen. Mithilfe der Energieumwandler kann eine mechanische Leistung erzeugbar sein. Das Kraftfahrzeug kann einen parallelen Hybridantrieb aufweisen. Das Kraftfahrzeug kann einen Vollhybridantrieb aufweisen.

Die Kupplungseinrichtung kann eine Reibungskupplung aufweisen. Die Kupplungseinrichtung kann eine Mehrscheibenkupplung aufweisen. Die Kupplungseinrichtung kann eine Einscheibenkupplung aufweisen. Die Kupplungseinrichtung kann eine trockene Kupplung aufweisen. Die Kupplungseinrichtung kann eine nasse Kupplung aufweisen. Die Kupplungseinrichtung kann ein Gehäuse aufweisen. Die Kupplungseinrichtung kann eine Anpressplatte aufweisen. Die Kupplungseinrichtung kann wenigstens eine Zwischendruckplatte aufweisen. Die Kupplungseinrichtung kann eine Druckplatte aufweisen. Die Anpressplatte, die wenigstens eine Zwischendruckplatte und/oder die Druckplatte können Reibbeläge aufweisen. Die Kupplungseinrichtung kann wenigstens eine Kupplungsscheibe aufweisen. Die wenigstens eine Kupplungsscheibe kann Reibbeläge aufweisen. Es können Zwischendruckplatten und Kupplungsscheiben abwechselnd angeordnet sein. Die Anpressplatte kann relativ zur Druckplatte axial begrenzt verlagerbar sein. Die wenigstens eine Kupplungsscheibe kann zwischen der Anpressplatte, der wenigstens einen Zwischendruckplatte und/oder der Druckplatte einklemmbar sein.

Die Kupplungseinrichtung kann in dem Antriebsstrang zwischen der Brennkraftmaschine und der elektrischen Maschine anordenbar sein. Die Kupplungseinrichtung kann in dem Antriebsstrang zwischen der Brennkraftmaschine und dem Rotor der elektrischen Maschine anordenbar sein. Die Kupplungseinrichtung kann ein Eingangsteil und ein Ausgangsteil aufweisen. Die Bezeichnungen "Eingangsteil" und "Ausgangsteil" sind auf einen zu einem antreibbaren Rad des Kraftfahrzeugs hin gerichteten Leistungsfluss bezogen. Das Eingangsteil der Kupplungseinrichtung kann die wenigstens eine Kupplungsscheibe aufweisen. Das Eingangsteil der Kupplungseinrichtung kann mit der Brennkraftmaschine antriebsverbindbar sein. Das Ausgangsteil der Kupplungseinrichtung kann die Anpressplatte, die wenigstens eine Zwischendruckplatte und/oder die Druckplatte aufweisen. Das Ausgangsteil der Kupplungseinrichtung kann mit der elektrischen Maschine antriebsverbindbar sein. Das Ausgangsteil der Kupplungseinrichtung kann mit dem Rotor der elektrischen Maschine antriebsverbindbar sein. Die Kupplungseinrichtung kann in dem Antriebsstrang zwischen der Brennkraftmaschine und der Getriebeeinrichtung anordenbar sein. Das Ausgangsteil der Kupplungseinrichtung kann mit der Getriebeeinrichtung antriebsverbindbar sein. Das Ausgangsteil der Kupplungseinrichtung kann mit einer Eingangswelle der Getriebeeinrichtung antriebsverbindbar sein. Die Kupplungseinrichtung kann in dem Antriebsstrang zwischen dem Drehschwingungsdämpfer und der elektrischen Maschine anordenbar sein. Das Eingangsteil der Kupplungseinrichtung kann mit dem Drehschwingungsdämpfer antriebsverbindbar sein. Das Eingangsteil der Kupplungseinrichtung kann mit dem Ausgangsteil des Drehschwingungsdämpfers antriebsverbindbar sein. Die Kupplungseinrichtung kann in dem Antriebsstrang zwischen dem Drehschwingungsdämpfer und der Getriebeeinrichtung anordenbar sein.

Die Kupplungseinrichtung kann ausgehend von einer vollständig ausgerückten Betätigungsstellung, in der zwischen dem Eingangsteil und dem Ausgangsteil im Wesentlichen keine Leistungsübertragung erfolgt, bis hin zu einer vollständig eingerückten Betätigungsstellung, in der zwischen dem Eingangsteil und dem Ausgangsteil im Wesentlichen eine vollständige Leistungsübertragung erfolgt, betätigungsabhängig eine zunehmende Leistungsübertragung ermöglichen, wobei eine Leistungsübertragung zwischen dem Eingangsteil und dem Ausgangsteil kraftschlüssig, insbesondere reibschlüssig, erfolgen kann. Umgekehrt kann ausgehend von einer vollständig eingerückten Betätigungsstellung, in der zwischen dem Eingangsteil und dem Ausgangsteil im Wesentlichen eine vollständige Leistungsübertragung erfolgt, bis hin zu einer vollständig ausgerückten Betätigungsstellung, in der zwischen dem Eingangsteil und dem Ausgangsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die Kupplungseinrichtung kann einen Momentfühler aufweisen. Der Momentfühler kann an dem Eingangsteil der Kupplungseinrichtung angeordnet sein. Der Momentfühler kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Ein Moment kann aufgrund einer Relativverdrehung zwischen dem Eingangsteil und dem Ausgangsteil entgegen einer Kraft des Energiespeichers bestimmbar sein. Mithilfe des Momentfühlers kann eine Regelung bzw. ein Öffnen der Kupplungseinrichtung erfolgen.

Die Getriebeeinrichtung kann eine Eingangswelle und eine Ausgangswelle aufweisen. Die Bezeichnungen "Eingangswelle" und "Ausgangswelle" sind auf einen von der Brennkraftmaschine oder von der elektrischen Maschine ausgehenden Leistungsfluss bezogen. Die Getriebeeinrichtung kann ein Stufengetriebe aufweisen. Die Getriebeeinrichtung kann ein stufenloses Getriebe aufweisen. Die Getriebeeinrichtung kann ein Doppelkupplungsgetriebe aufweisen. Die Getriebeeinrichtung kann ein Wandlerschaltkupplungsgetriebe aufweisen. Die Getriebeeinrichtung kann manuell schaltbar sein. Die Getriebeeinrichtung kann automatisiert schaltbar sein. Die Eingangswelle kann mit der elektrischen Maschine antriebsverbunden sein. Die Eingangswelle kann mit dem Rotor der elektrischen Maschine antriebsverbunden sein. Die Eingangswelle kann mit der Kupplungseinrichtung antriebsverbunden sein. Die Eingangswelle kann mit dem Ausgangsteil der Kupplungseinrichtung antriebsverbunden sein. Die Ausgangswelle kann mit dem wenigstens einen antreibbaren Rad antriebsverbunden sein.

Die elektrische Maschine kann ein Gehäuse aufweisen. Der Stator kann zu dem Gehäuse fest angeordnet sein. Der Stator kann radial außerhalb des Rotors angeordnet sein. Die elektrische Maschine kann wenigstens eine Welle oder Nabe aufweisen. Der Rotor kann an der wenigstens einen Welle oder Nabe fest angeordnet sein. Der Rotor kann radial innerhalb des Stators angeordnet sein. Die elektrische Maschine kann eine erste Welle oder Nabe und eine zweite Welle oder Nabe aufweisen. Die erste Welle oder Nabe und die zweite Welle oder Nabe können koaxial angeordnet sein. Der Rotor kann an der zweiten Welle oder Nabe fest angeordnet sein. Die erste Welle oder Nabe kann dem Eingangsteil der Kupplungseinrichtung zugeordnet sein. Die zweite Welle oder Nabe kann dem Ausgangsteil der Kupplungseinrichtung zugeordnet sein. Der Rotor kann eine hülsenartige Form aufweisen. Der Rotor kann eine rohrabschnittartige Form aufweisen. Der Rotor kann eine hohlzylindrische Form aufweisen. In dem Rotor kann ein Aufnahmeraum gebildet sein.

Eine in den Rotor integrierte Kupplungseinrichtung kann eine Kupplungseinrichtung sein, die zumindest annähernd vollständig innerhalb des Rotors angeordnet ist. Eine in den Rotor integrierte Kupplungseinrichtung kann eine Kupplungseinrichtung sein, die radial zumindest annähernd vollständig innerhalb des Rotors angeordnet ist. Eine radiale Richtung ist eine zu einer Drehachse der elektrischen Maschine senkrechte Richtung. Eine in den Rotor integrierte Kupplungseinrichtung kann eine Kupplungseinrichtung sein, die axial zumindest annähernd vollständig innerhalb des Rotors angeordnet ist. Eine axiale Richtung ist eine Erstreckungsrichtung einer Drehachse der elektrischen Maschine. Eine in den Rotor integrierte Betätigungseinrichtung kann eine Betätigungseinrichtung sein, die zumindest annähernd vollständig innerhalb des Rotors angeordnet ist. Eine in den Rotor integrierte Betätigungseinrichtung kann eine Betätigungseinrichtung sein, die radial zumindest annähernd vollständig innerhalb des Rotors angeordnet ist. Eine in den Rotor integrierte Betätigungseinrichtung kann eine Betätigungseinrichtung sein, die axial zumindest annähernd vollständig innerhalb des Rotors angeordnet ist. Die Kupplungseinrichtung und die Betätigungseinrichtung können in Erstreckungsrichtung einer Drehachse der Kupplungseinrichtung hintereinander angeordnet sein. Die Betätigungseinrichtung kann auf einer der Brennkraftmaschine zugewandten Seite angeordnet sein. Die Kupplungseinrichtung kann auf einer der Getriebeeinrichtung zugewandten Seite angeordnet sein.

Mithilfe der Betätigungseinrichtung kann die Anpressplatte der Kupplungseinrichtung axial verlagerbar sein. Mithilfe der Betätigungseinrichtung kann die Kupplungseinrichtung geöffnet oder geschlossen werden. Mithilfe der Betätigungseinrichtung kann die Kupplungseinrichtung eingerückt oder ausgerückt werden.

Die Betätigungseinrichtung kann selbstverstärkend sein. Damit ist eine Schaltung einer vergleichsweise hohen Arbeitsleistung mit einer vergleichsweise geringen Betätigungskraft ermöglicht. Es kann eine Betätigungskraft selbstverstärkt sein. Die geringe Betätigungskraft kann auch als Vorsteuermoment bezeichnet werden. Damit ist eine verringerte Betätigungsenergie erforderlich, um die Kupplungseinrichtung ein- und/oder auszurücken. Es ist eine verringerte Betätigungskraft erforderlich. Es ist ein verringerter Betätigungsweg erforderlich. Der Aktuator kann eine verringerte Leistung aufweisen. Der Aktuator kann eine verringerte Leistungsaufnahme aufweisen. Der Aktuator kann einen verringerten Bauraum aufweisen. Der Aktuator kann ein verringertes Gewicht aufweisen. Eine Schaltgeschwindigkeit kann erhöht sein.

Die ersten Rampen können ringartig in Umfangsrichtung der Kupplungseinrichtung angeordnet sein. Die zweiten Rampen können ringartig in Umfangsrichtung der Kupplungseinrichtung angeordnet sein. Die ersten Rampen und die zweiten Rampen können relativ zueinander verdrehbar sein. Die Rampeneinrichtung kann ausgehend von einer Bewegung in Umfangsrichtung der Kupplungseinrichtung eine Bewegung in Erstreckungsrichtung der Drehachse der Kupplungseinrichtung ermöglichen. Die Rampeneinrichtung kann axial wirksam sein. Zwischen den ersten Rampen und den zweiten Rampen können Wälzkörper, insbesondere Kugeln, angeordnet sein. Die Rampen können Laufflächen für die Wälzkörper bilden. Die Rampen können als Wälzkörperrampen, insbesondere als Kugelrampen, ausgebildet sein. Die Rampen können in Umfangsrichtung der Kupplungseinrichtung verteilt angeordnet sein. Die Rampen zu einer zur Drehachse der Kupplungseinrichtung senkrechten Ebene schief sein. Die Rampen können in Umfangsrichtung der Kupplungseinrichtung ansteigen und/oder abfallen. Die Rampen können einseitig ansteigend sein. Die Rampen können beidseitig ansteigend sein. Die ersten Rampen und die zweiten Rampen können zueinander geometrisch komplementär ausgebildet sein. Die ersten Rampen können mit den zweiten Rampen derart korrespondieren, dass sich bei einer Bewegung der ersten Rampen und der zweiten Rampen in Umfangsrichtung der Kupplungseinrichtung relativ zueinander die ersten Rampen und die zweiten Rampen in Erstreckungsrichtung der Drehachse der Kupplungseinrichtung voneinander weg oder aufeinander zu bewegen. Die ersten Rampen können die Wälzkörper von radial innen stützen. Die zweiten Rampen können die Wälzkörper von radial außen stützen. Die Wälzkörper können einen derartigen Durchmesser aufweisen, dass sie zwischen den ersten Rampen und den zweiten Rampen verliersicher gehalten sind. Die Wälzkörper können in einem Wälzkörperkäfig angeordnet sein. Damit ist eine gleichmäßige Zuordnung der Wälzkörper zu den Rampen gewährleistet.

Ein aktives Verdrehen setzt kein Drehen der Kupplungseinrichtung, der Betätigungseinrichtung oder des Rotors voraus. Bei einem aktiven Verdrehen kann eine Betätigungsbewegung alleine durch den Aktuator erzeugt werden.

Mit der erfindungsgemäßen Kupplungseinrichtung ist eine Betätigung der Kupplungseinrichtung auch bei Stillstand der Brennkraftmaschine und/oder der elektrischen Maschine ermöglicht. Eine Funktion als Wegfahrsperre ist ermöglicht. Bei Bestromung ist ein Vorsteuermoment zur Betätigung der Kupplungseinrichtung bereitstellbar.

Die Betätigungseinrichtung kann einen verdrehbaren Rampenring aufweisen, an dem die ersten Rampen angeordnet sind, und die Kupplungseinrichtung kann eine begrenzt axial verlagerbare Anpressplatte, an der die zweiten Rampen angeordnet sind, aufweisen.

Der Aktuator kann unmittelbar auf die Rampeneinrichtung wirken. Der Aktuator kann sich einerseits an der Rampeneinrichtung und andererseits an dem Gehäuse der Kupplungseinrichtung abstützen. Der Aktuator kann unmittelbar auf den Rampenring wirken. Der Rampenring kann mithilfe des Aktuators unmittelbar verdrehbar sein.

Alternativ kann der Aktuator unter Zwischenschaltung eines Umlaufrädergetriebes auf die Rampeneinrichtung wirken. Das Umlaufrädergetriebe kann ein Sonnenrad, Planetenräder, einen Steg und ein Hohlrad aufweisen und das Sonnenrad kann mithilfe des Aktuators antreibbar, der Steg kann mit der Rampeneinrichtung fest verbunden und das Hohlrad kann mit dem Rotor fest verbunden sein. Der Steg kann mit dem Rampenring fest verbunden sein. Das Umlaufrädergetriebe kann auch als Planetengetriebe bezeichnet werden. Das Hohlrad kann eine Innenverzahnung aufweisen. Das Sonnenrad kann eine Außenverzahnung aufweisen. Die Planetenräder können jeweils eine Außenverzahnung aufweisen. Die Planetenräder können mit dem Hohlrad und dem Sonnenrad in Eingriff stehen. Mithilfe des Aktuators kann das Sonnenrad mit einem Vorsteuermoment beaufschlagbar sein. Mithilfe des Aktuators kann das Sonnenrad mit einem Moment derart beaufschlagbar sein, dass sich der Rampenring mit den ersten Rampen und die Anpressplatte mit den zweiten Rampen relativ zueinander verdrehen. Der Aktuator kann auf den Steg wirken. Der Aktuator kann auf das Hohlrad wirken. Zur Ansteuerung des Aktuators kann eine elektrische Steuereinrichtung vorgesehen sein.

Der Aktuator kann eine Magnetkupplung, eine Magnetpulverkupplung, eine magnetorheologische Kupplung, eine elektrorheologische Kupplung, wenigstens ein Piezoelement, eine Hysteresebremse, einen Elektromotor, einen Servomotor oder einen Stellmotor aufweisen.

Eine Magnetkupplung kann eine Kupplung sein, bei deren Betätigung oder Wirken ein Magnetfeld involviert ist. Eine Magnetkupplung kann eine Elektromagnetkupplung, eine Magnetpulverkupplung, eine magnetorheologische Fluid-Kupplung oder eine berührungslose Magnetkupplung sein.

Eine Elektromagnetkupplung kann eine elektrisch fernschaltbare, kraft- oder formschlüssige Kupplung sein. Die Elektromagnetkupplung kann im Grundaufbau einer Einscheibentrockenkupplung ähnlich sein. Die Elektromagnetkupplung kann ein drehfestes Kupplungsteil und ein drehbares Kupplungsteil aufweisen. Die Elektromagnetkupplung kann einen Elektromagnet aufweisen. Der Elektromagnet kann drehfest angeordnet sein. Mithilfe eines Magnetfelds des Elektromagneten kann über einen Luftspalt das drehbare Kupplungsteil erreichbar sein. Die Elektromagnetkupplung kann eine axial begrenzt verlagerbare Anpressplatte und eine Kupplungsscheibe aufweisen. In Abhängigkeit von einer angelegten elektrischen Spannung kann ein entsprechend starkes Magnetfeld auf die Anpressplatte wirken. Die Kupplungsscheibe ist so zur Leistungsübertragung einklemmbar.

Eine Magnetpulverkupplung kann eine reibschlüssige Kupplung sein. Die Magnetpulverkupplung kann eine Antriebsdruckplatte und eine Abtriebsdruckplatte aufweisen. Zwischen der Antriebsdruckplatte und der Abtriebsdruckplatte kann ein Spalt angeordnet sein. In dem Spalt kann ein Metallpulver oder Metallgel angeordnet sein. Das Metallpulver oder Metallgel kann Metallteilchen aufweisen. In einer Druckplatte kann ein Elektromagnet angeordnet sein. Der Elektromagnet kann die Metallteilchen magnetisieren und dabei versteifen. Dadurch kann eine kraftschlüssige Verbindung erreichbar sein. Durch Ändern einer angelegten Spannung ist eine Übertragungsleistung kontrollierbar.

Eine magnetorheologische Fluid-Kupplung (MRF-Kupplung) kann prinzipiell wie eine Magnetpulverkupplung aufgebaut sein. Statt eines Metallpulvers kann jedoch eine magnetorheologische Flüssigkeit verwendet werden. Diese kann unter Einfluss eines Magnetfeldes ihre Konsistenz von flüssig über gelförmig zu fest verändern. Vorteile einer MRF-Kupplung gegenüber einer Metallpulverkupplung sind eine verbesserte Abdichtbarkeit des Übertragungsmediums nach außen, eine verringerte innere Reibung im getrennten Zustand sowie eine verbesserte Wärmeableitung. Die MRF-Kupplung kann im Scheiben- oder Trommeldesign sowie in neuartigen Designs ausgeführt sein.

Eine berührungslose Magnetkupplung kann eine Leistungsübertragung durch Wandungen hindurch ermöglichen. Die berührungslose Magnetkupplung kann einen Dauermagnet oder einen Elektromagnet aufweisen. Eine antreibende Seite der berührungslosen Magnetkupplung kann ein Drehfeld eines Stators eines Elektromotors sein.

Eine elektrorheologische Kupplung (ERF-Kupplung) kann prinzipiell wie eine Magnetpulverkupplung aufgebaut sein. Statt eines Metallpulvers kann jedoch eine elektrorheologische Flüssigkeit verwendet werden. Diese kann unter Einfluss eines elektrischen Felds ihre Konsistenz von flüssig über gelförmig zu fest verändern.

Ein Piezoelement kann einen inversen Piezoeffekt ausnutzen und bei Anlegen einer elektrischen Spannung eine mechanische Bewegung ausführen. Ein kleiner Elektrodenabstand kann dazu dienen, bei kleinen Spannungen möglichst große Bewegungsamplituden zu erreichen. Dazu können Piezoelemente mehrlagig kaskadenartig angeordnet sein. Mehrere dünne Piezoelemente können mit dazwischenliegenden Elektroden zusammengefügt sein. Die Piezoelemente können eine mechanische Reihenanordnung mit Ansteuerung durch eine elektrische Parallelschaltung aufweisen.

Eine Hysteresebremse kann auf einer Wirkung eines Magneten oder Elektromagneten auf ein sich bewegendes, ferromagnetisches Material basieren. Ein Energieverlust kann durch eine wiederholte Ummagnetisierung des Materials entstehen. Im Gegensatz zu einer Wirbelstrombremse ist die mechanische Leistung bei der Hysteresebremse nicht geschwindigkeits- bzw. drehzahlabhängig erzeugbar, d. h. die Hysteresebremse funktioniert gleichmäßig vom Stillstand bis zur konstruktiv möglichen Maximalgeschwindigkeit bzw. -drehzahl.

Ein Elektromotor kann ein elektromechanischer Wandler sein, der elektrische Energie in mechanische Energie umwandelt. In dem Elektromotor kann eine Kraft, die von einem Magnetfeld auf stromdurchflossene Leiter einer Spule ausgeübt wird, in Bewegung umgesetzt werden. Der Elektromotor kann als Linearantrieb ausgeführt sein.

Ein Servomotor kann ein elektrischer Motor sein, der mit einem Servoregler einen Servoantrieb bildet. Der Servoregler kann einen Servoverstärker und gegebenenfalls weitere Regelkreis-Übertragungsglieder aufweisen. Der Servomotor kann in einem geschlossenen Regelkreis betreibbar sein. Ein Betrieb kann moment-, geschwindigkeits- und/oder positionsgeregelt erfolgen. Kombinationen können durch eine Schachtelung von Regelkreisen ermöglicht sein. Ein Servomotor kann auch als Stellmotor bezeichnet werden.

Außerdem erfolgt die Lösung der der Erfindung zugrundeliegenden Aufgabe mit einer elektrische Maschine mit einem Stator, einem Rotor und einer in den Rotor integrierten derartigen Kupplungseinrichtung.

Zusammenfassend und mit anderen Worten dargestellt ergibt sich somit durch die Erfindung unter anderem eine Ansteuerung einer E-Clutch bzw. elektrische Ansteuerungen einer E-Clutch. Die Elemente Magnetkupplung, Magnetpulverkupplung, magnetorheologische Kupplung, elektrorheologische Kupplung, Piezoelemente, Hysteresebremse, Elektromotor und/oder Servomotor/Stellmotor können anstelle einer Wirbelstrombremse eingesetzt werden. Manche können elektrisch angesteuert werden und auch im Stillstand ein Haltemoment erzeugen. Das jeweilige Aktorelement kann entweder direkt auf das Rampensystem adaptiert werden, oder ein Planetengetriebe kann als zusätzliche Übersetzung zwischen Aktorelement und Rampen geschaltet werden. Ob ein Planetengetriebe zum Einsatz kommt, kann von dem benötigten Vorsteuermoment und der Momentenkapazität des ausgewählten Aktorelementes sowie dem dafür zur Verfügung stehenden Bauraum abhängen. Die Elemente können ebenfalls beliebig auf den Planetensatz verteilt sein. Die Rampen, das Aktorelement und der Rotor können jeweils auf Sonne, Steg und Hohlrad platziert werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Antriebsstrang eines Kraftfahrzeugs mit einem parallelen Vollhybridantrieb und einer in dem Antriebsstrang angeordneten Kupplungseinrichtung und
- Fig. 2: eine in einen Rotor einer elektrischen Maschine integrierte Kupplung mit einer Betätigungseinrichtung für ein Kraftfahrzeug mit einem Hybridantrieb.

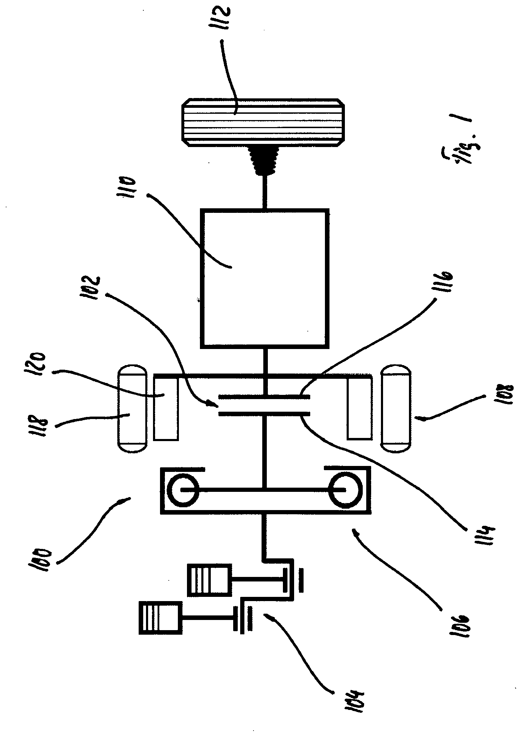

Fig. 1 zeigt einen Antriebsstrang 100 eines hier ansonsten nicht näher dargestellten Kraftfahrzeugs mit einem parallelen Vollhybridantrieb und einer in dem Antriebsstrang 100 angeordneten Kupplungseinrichtung 102. Der Antriebsstrang 100 weist eine Brennkraftmaschine 104, ein Zweimassenschwungrad 106, die Kupplungseinrichtung 102, eine elektrische Maschine 108, ein Getriebe 110 und wenigstens ein antreibbares Rad 112 auf. Die elektrische Maschine 108 ist als Motor betreibbar. Die Kupplungseinrichtung 102 ist in dem Antriebsstrang 100 zwischen dem Zweimassenschwungrad 106 und der elektrischen Maschine 108 angeordnet. Die Kupplungseinrichtung 102 ist in dem Antriebsstrang 100 zwischen dem Zweimassenschwungrad 106 und dem Getriebe 110 angeordnet.

Die Kupplungseinrichtung 102 weist ein Eingangsteil 114 und ein Ausgangsteil 116 auf. Das Eingangsteil 114 der Kupplungseinrichtung 102 ist mit dem Zweimassenschwungrad 106 verbunden. Das Ausgangsteil 116 der Kupplung 102 ist mit der elektrischen Maschine 108 verbunden. Die elektrische Maschine 108 weist einen Stator 118 und einen Rotor 120 auf. Das Ausgangsteil 116 der Kupplungseinrichtung 102 ist mit dem Rotor 120 der elektrischen Maschine 108 verbunden. Das Ausgangsteil 116 der Kupplungseinrichtung 102 ist mit dem Getriebe 110 verbunden. Die elektrische Maschine 108 ist mit dem Getriebe 110 verbunden. Der Rotor 120 der elektrischen Maschine 108 ist mit dem Getriebe 110 verbunden.

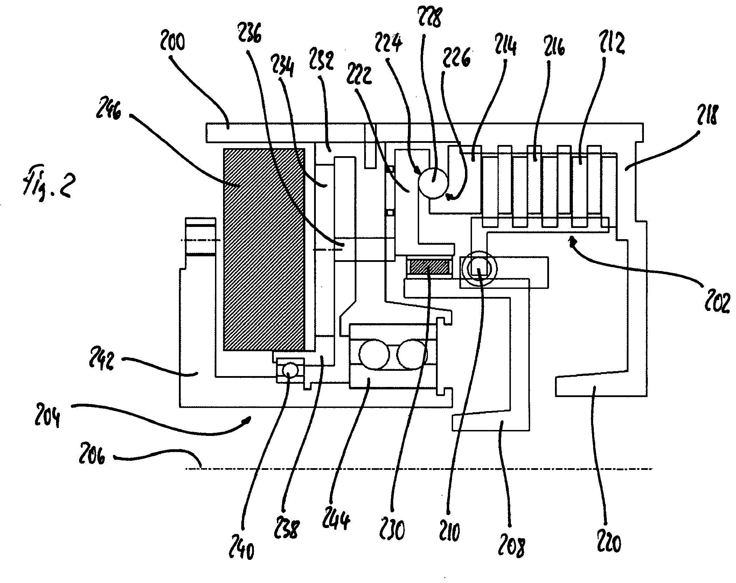

Fig. 2 zeigt eine in einen Rotor 200 einer hier ansonsten nicht näher dargestellten elektrischen Maschine integrierte Kupplung 202, wie Kupplung 102 gemäß Fig. 1, mit einer Betätigungseinrichtung 204 für ein Kraftfahrzeug mit einem Hybridantrieb.

Der Rotor 200 weist eine Drehachse 206 auf. Die Kupplung 202 ist in Erstreckungsrichtung der Drehachse 206 sowie in radialer Richtung innerhalb des Rotors 200 angeordnet. Die Kupplung 202 weist ein Eingangsteil und ein Ausgangsteil auf. Das Eingangsteil weist ein Nabenteil 208, einen Momentfühler 210 und Kupplungsscheiben, wie 212, auf. Das Ausgangsteil der Kupplung 202 weist eine Anpressplatte 214, Zwischendruckplatten, wie 216, eine Druckplatte 218 und ein Nabenteil 220 auf. Die Kupplungsscheiben 212 sind drehfest mit dem Nabenteil 208 verbunden. Die Anpressplatte 214, die Zwischendruckplatten 216 und die Druckplatte 218 sind drehfest mit dem Nabenteil 220 verbunden. Die Anpressplatte 214, die Zwischendruckplatten 216 und die Druckplatte 218 sind drehfest mit dem Rotor 200 verbunden. Die Anpressplatte 214 ist in Erstreckungsrichtung der Drehachse 206 begrenzt axial verlagerbar.

Zur Betätigung der Kupplung 202 ist die Betätigungseinrichtung 204 vorgesehen. Die Betätigungseinrichtung 204 ist in Erstreckungsrichtung der Drehachse 206 sowie in radialer Richtung innerhalb des Rotors 200 angeordnet. Mithilfe der Betätigungseinrichtung 204 ist die Anpressplatte 214 mit einer Betätigungskraft beaufschlagbar. Mithilfe der Betätigungseinrichtung 204 ist die Anpressplatte 214 axial verlagerbar.

Die Betätigungseinrichtung weist eine Rampeneinrichtung auf. Die Rampeneinrichtung weist einen Rampenring 222 mit ersten Rampen, wie 224, auf. Die Rampeneinrichtung weist zweite Rampen, wie 226, auf. Die zweiten Rampen 226 sind an der Anpressplatte 214 angeordnet. Zwischen den ersten Rampen 224 und den zweiten Rampen 226 sind Kugeln 228 angeordnet. Der Rampenring 222 ist mithilfe eines Lagers 230 drehbar auf dem Nabenteil 208 gelagert. Der Rampenring 222 mit den ersten Rampen 224 ist um die Drehachse 206 relativ zu der Anpressplatte 214 mit den zweiten Rampen 226 verdrehbar. Ein Verdrehen des Rampenrings 220 bewirkt eine Änderung eines Abstands zwischen Kontaktflächen der ersten Rampen 224 und Kontaktflächen zweiten Rampen 226 in Erstreckungsrichtung der Drehachse 206. Damit ist eine Klemmung der Kugeln 228 zwischen den ersten Rampen 224 und den zweiten Rampen 226 kontrollierbar.

Die Betätigungseinrichtung weist ein Planetengetriebe mit einem Hohlrad 232, Planetenrädern, wie 234, einem Steg 236 und einem Sonnenrad 238 auf. Das Hohlrad 232 weist eine Innenverzahnung auf. Das Sonnenrad 238 weist eine Außenverzahnung auf. Die Planetenräder 234 weisen jeweils eine Außenverzahnung auf und sind mit dem Hohlrad 232 und dem Sonnenrad 238 verzahnt. Der Steg 236 verbindet die Planetenräder 234. Das Hohlrad 232 ist mit dem Rotor 200 fest verbunden. Der Planetenträger ist mit dem Rampenring 222 fest verbunden. Das Sonnenrad 238 ist mithilfe eines Lagers 240 drehbar auf einem feststehenden Wellenstumpf 242 gelagert. Der Rotor 200 ist über des Hohlrad 232 mithilfe eines Lagers 244 drehbar auf dem Wellenstumpf 242 gelagert. Das Lager 244 ist vorliegend als zweireihiges Kugellager ausgeführt.

Die Betätigungseinrichtung weist einen elektrischen Aktuator 246 auf. Der Aktuator 246 kann auf das Sonnenrad 238 des Planetengetriebes wirken. Über das Sonnenrad 238 kann damit ein Vorsteuermoment zur Betätigung der Kupplung 202 eingeleitet werden. Mithilfe des Aktuators 246 ist der Rampenring 222 unabhängig von einem Drehen des Rotors 200 aktiv verdrehbar. Der Aktuator 246 ist beispielsweise eine Magnetkupplung, eine Magnetpulverkupplung, eine magnetorheologische Kupplung, eine elektrorheologische Kupplung, ein Piezoaktuator, eine Hysteresebremse, ein Elektromotor, ein Servomotor oder ein Stellmotor.

### Bezugszeichenliste

- 100: Antriebsstrang
- 102: Kupplungseinrichtung
- 104: Brennkraftmaschine
- 106: Zweimassenschwungrad
- 108: elektrische Maschine
- 110: Getriebe
- 112: Rad
- 114: Eingangsteil
- 116: Ausgangsteil
- 118: Stator
- 120: Rotor

- 200: Rotor
- 202: Kupplung
- 204: Betätigungseinrichtung
- 206: Drehachse
- 208: Nabenteil
- 210: Momentfühler
- 212: Kupplungsscheibe
- 214: Anpressplatte
- 216: Zwischendruckplatte
- 218: Druckplatte
- 220: Nabenteil
- 222: Rampenring
- 224: erste Rampen
- 226: zweite Rampen
- 228: Kugel
- 230: Lager
- 232: Hohlrad
- 234: Planetenrad
- 236: Steg
- 238: Sonnenrad
- 240: Lager
- 242: Wellenstumpf
- 244: Lager
- 246: Aktuator

## Patentansprüche

1. Elektrische Maschine (108) mit einer Kupplungseinrichtung (102) und einer Betätigungseinrichtung (204) für einen Antriebsstrang (100) eines Kraftfahrzeugs, wobei die Kupplungseinrichtung (102) und die Betätigungseinrichtung (204) in einen Rotor (120, 200) der elektrischen Maschine (108) integriert sind, und die Betätigungseinrichtung (204) eine verdrehbare Rampeneinrichtung mit ersten Rampen (224) und zweiten Rampen (226) und einen elektrischen Aktuator (246) zum aktiven Verdrehen der Rampeneinrichtung aufweist, wobei die Betätigungseinrichtung (204) einen verdrehbaren Rampenring (222) aufweist, an dem die ersten Rampen (224) angeordnet sind, und die Kupplungseinrichtung (102) eine begrenzt axial verlagerbare Anpressplatte (214) aufweist, an der die zweiten Rampen (226) angeordnet sind, **dadurch gekennzeichnet, dass** der Rampenring (222) mithilfe des Aktuators (246) unmittelbar verdrehbar ist, oder der Aktuator (246) unter Zwischenschaltung eines Umlaufrädergetriebes auf die Rampeneinrichtung wirkt.

2. Elektrische Maschine (108) mit einer Kupplungseinrichtung (102) und einer Betätigungseinrichtung (204) gemäß der ersten Alternative nach Anspruch 1, **dadurch gekennzeichnet, dass** der Aktuator (246) unmittelbar auf die Rampeneinrichtung wirkt.

3. Elektrische Maschine (108) mit einer Kupplungseinrichtung (102) und einer Betätigungseinrichtung (204) gemäß der zweiten Alternative nach Anspruch 1, **dadurch gekennzeichnet, dass** das Umlaufrädergetriebe ein Sonnenrad (238), Planetenräder (234), einen Steg (236) und ein Hohlrad (232) aufweist und das Sonnenrad (238) mithilfe des Aktuators (246) antreibbar, der Steg (236) mit der Rampeneinrichtung fest verbunden und das Hohlrad (232) mit dem Rotor (200) fest verbunden ist.

4. Elektrische Maschine (108) mit einer Kupplungseinrichtung (102) und einer Betätigungseinrichtung (204) nach wenigstens einem der vorhergehenden Ansprüche, **dadurch gekennzeichnet, dass** der Aktuator (246) eine Magnetkupplung, eine Magnetpulverkupplung, eine magnetorheologische Kupplung, eine elektrorheologische Kupplung, wenigstens ein Piezoelement, eine Hysteresebremse, einen Elektromotor, einen Servomotor oder einen Stellmotor aufweist.

## Claims

1. Electric machine (108) comprising a clutch device (102) and an actuation device (204) for a drivetrain (100) of a motor vehicle, wherein the clutch device (102) and the actuation device (204) are integrated into a rotor (120, 200) of the electric machine (108), and the actuation device (204) comprises a rotatable ramp device having first ramps (224) and second ramps (226) and an electric actuator (246) for actively rotating the ramp device, wherein the actuation device (204) comprises a rotatable ramp ring (222) at which the first ramps (224) are arranged, and the clutch device (102) comprises a pressure plate (214) which is axially displaceable to a limited extent and at which the second ramps (226) are arranged, **characterized in that** the ramp ring (222) is rotatable directly using the actuator (246) or the actuator (246) acts on the ramp device with the interposition of an epicyclic gear set.

2. Electric machine (108) comprising a clutch device (102) and an actuation device (204) aaccording to the first alternative of Claim 1, **characterized in that** the actuator (246) acts directly on the ramp device.

3. Electric machine (108) comprising a clutch device (102) and an actuation device (204) according to the second alternative of Claim 1, **characterized in that** the epicyclic gear set comprises a sun gear (238), planet gears (234), a planet carrier (236) and an internal gear (232), and the sun gear (238) is driveable using the actuator (246), the planet carrier (236) is fixedly connected to the ramp device, and the internal gear (232) is fixedly connected to the rotor (200).

4. Electric machine (108) comprising a clutch device (102) and an actuation device (204) according to at least one of the preceding claims, **characterized in that** the actuator (246) comprises a magnetic clutch, a magnetic particle clutch, a magnetorheological clutch, an electrorheological clutch, at least one piezo element, a hysteresis brake, an electric motor, a servomotor or an actuating motor.

## Revendications

1. Machine électrique (108) comprenant un dispositif d'embrayage (102) et un dispositif d'actionnement (204) pour une chaîne cinématique (100) d'un véhicule automobile, le dispositif d'embrayage (102) et le dispositif d'actionnement (204) étant intégrés dans un rotor (120, 200) de la machine électrique (108), et le dispositif d'actionnement (204) présentant un dispositif de rampes rotatif avec des premières rampes (224) et des deuxièmes rampes (226) et un actionneur électrique (246) pour faire tourner activement le dispositif de rampes, le dispositif d'actionnement (204) présentant un anneau de rampes rotatif (222) sur lequel sont disposées les premières rampes (224) et le dispositif d'embrayage (102) présentant une plaque de pressage (214) pouvant être déplacée axialement dans une mesure limitée, sur laquelle sont disposées les deuxièmes rampes (226), **caractérisée en ce que** l'anneau de rampes (222) peut être mis en rotation directement à l'aide de l'actionneur (246), ou l'actionneur (246) agit sur le dispositif de rampes par interposition d'un train épicycloïdal.

2. Machine électrique (108) comprenant un dispositif d'embrayage (102) et un dispositif d'actionnement (204) selon la première alternative de la revendication 1, **caractérisée en ce que** l'actionneur (246) agit directement sur le dispositif de rampes.

3. Machine électrique (108) comprenant un dispositif d'embrayage (102) et un dispositif d'actionnement (204) selon la deuxième alternative de la revendication 1, **caractérisée en ce que** le train épicycloïdal présente une roue solaire (238), des satellites (234), un porte-satellites (236) et une couronne dentée (232) et la roue solaire (238) peut être entraînée à l'aide de l'actionneur (246), le porte-satellites (236) est connecté fixement au dispositif de rampes et la couronne dentée (232) est connectée fixement au rotor (200).

4. Machine électrique (108) comprenant un dispositif d'embrayage (102) et un dispositif d'actionnement (204) selon au moins l'une quelconque des revendications précédentes, **caractérisée en ce que** l'actionneur (246) présente un embrayage magnétique, un embrayage à poudre magnétique, un embrayage magnétorhéologique, un embrayage électrorhéologique, au moins un élément piézoélectrique, un frein à hystérésis, un moteur électrique, un servomoteur ou un moteur de commande.
